# EUROPEAN PATENT APPLICATION

(11) **EP 3 029 795 A1**
(43) Date of publication of application: **08.06.2016**
(21) Application number: 14831334.9
(22) Date of filing: 28.07.2014
(51) Int. Cl.: H02J 3/00, H02J 13/00

(54) **POWER SUPPLY/DEMAND ADJUSTMENT SYSTEM AND POWER SUPPLY/DEMAND ADJUSTMENT METHOD**

(30) Priority: 31.07.2013 JP 2013159573
(71) Applicant: NEC Corporation, Tokyo 108-8001 (JP)
(72) Inventor: OHTA, Yuko, Tokyo 108-8001 (JP); SHIZUNO, Takayuki, Tokyo 108-8001 (JP)
(74) Representative: Vossius & Partner Patentanwälte Rechtsanwälte mbB
(86) International application number: PCT/JP2014/069861
(87) International publication number: WO 2015/016192

(57) **Abstract**

To optimize balance of supply and demand by making a demand amount of electric power as the whole of a plurality of charging apparatuses fluctuate while reflecting an idea of a manager of the charging apparatuses. A power supply/demand adjustment system 1 has a store information management server 220 configured to store information relating to power utilization at stores 300, power management servers 310 provided for each of the stores 300 and configured to manage operation of quick chargers 350, or the like, and an operation management server 210. The operation management server 210 receives a demand response, replaces the received demand response with a commit type demand response set for each of the stores 300 by utilizing at least one piece of information stored in the store information management server 220, and transmits the replaced commit type demand response to the power management server 310 of the respective stores 300.

## Description

### Technical Field

The present invention relates to a power supply/demand adjustment system and a power supply/demand adjustment method which adjust power utilization at a plurality of charging apparatuses according to demand responses.

### Background Art

Currently, most of electric energy to be used is obtained through nuclear power generation and thermal power generation. However, in recent years, because there has been an increased need for a safer power generation method, and there is concern of depletion of oil resources, or the like, required for the thermal power generation, power generation utilizing natural energy such as wind power is actively studied. Meanwhile, concerning demand for power, because it is expected that electric equipment will further increase and electric vehicles will become more prevalent, it is considered that the demand will also be on the increase in the future.

While unstable electric power generation using natural energy increases as described above, there is an increased need for efficient and stable utilization of an electric power system as the demand for electric power is increased.

Patent Document 1 (Japanese Patent Laid-Open No. 2010-166636) discloses a power supply/demand operation management system which realizes saving of electricity bill while preventing degradation of convenience and comfort of individual consumers as much as possible. With such a system, first, a power supply/demand operation management server acquires information which specifies constraints regarding comfort and electricity bill from a consumer power operating apparatus. Then, the power supply/demand operation management server computes control details of electric equipment for which a cost evaluation value becomes a minimum based on a simulation result of the cost evaluation value which is an index for evaluating comfort and excess of electricity bill, and transmits the control details to the consumer power operating apparatus.

Patent Document 2 (Japanese Patent Laid-Open No. 2007-206889) discloses a system regarding power supply to a power station which charges electric vehicles. More specifically, a location of the power station, weather forecasting and traffic volume prediction are appropriately acquired from a database, a required amount of electric power for the power station is calculated based on these, and an amount of electric power to be purchased from power markets is determined according to the calculated amount of electric power. By this means, it is possible to efficiently purchase an appropriate amount of electric power from power markets and provide the electric power to customers.

### Prior Art Reference

### Patent Document

Patent Document 1: Japanese Patent Laid-Open No. 2010-166636
Patent Document 2: Japanese Patent Laid-Open No. 2007-206889

### Summary of Invention

### Problems to be Solved by the Invention

While the system disclosed in Patent Document 1 realizes optimization for individual consumers, when this technique is applied to charging service which is common in that electric power is utilized, circumstances are different. Examples of the charging service include a case where electric vehicles are charged as business, and in accordance with spread of electric vehicles, the charging service is considered to further expand in the future. Typically, a charging service provider manages a plurality of charging stations. In this case, the charging stations correspond to consumers described in Patent Document 1. Therefore, when the system disclosed in Patent Document 1 is applied to the charging service, while power supply at individual charging stations may be optimized, an idea of the charging service provider is not reflected. In charging service business, convenience of customers may be prioritized over convenience of individual charging stations, electricity bill, or the like.

Further, the system disclosed in Patent Document 2 is directed to calculating a required amount of electric power to collectively purchase an appropriate amount of electric power from power markets, and is different from one which achieves balance of supply and demand of electric power by consumers fluctuating a demand for electric power.

An object of the present invention is to, when the balance of supply and demand for electric power at a plurality of charging apparatuses is adjusted, optimize the balance of supply and demand by making an overall demand for electric power at the plurality of charging apparatuses fluctuate while reflecting an idea of a manager of these charging apparatuses.

### Means for Solving the Problems

A power supply/demand adjustment system of the present invention includes
a plurality of charging apparatuses at which at least one battery charger is respectively provided,
a charging apparatus information management server configured to store at least one piece of information relating to power utilization of the plurality of charging apparatuses,
power management servers provided for each of the plurality of charging apparatuses and configured to manage the power utilization at the charging apparatuses at which the power management servers are provided, and
an operation management server configured to receive a power supply/demand adjustment instruction, replace the power supply/demand adjustment instruction with a commit type power supply/demand adjustment instruction, which is set for each of the charging apparatuses so as to respond to the power supply/demand adjustment instruction as the whole of the plurality of charging apparatuses, by utilizing at least one piece of information stored in the charging apparatus information management server, and transmit the replaced commit type power supply/demand adjustment instruction to the power management servers of the plurality of charging apparatuses.

A power supply/demand adjustment method of the present invention is a power supply/demand adjustment method for adjusting power utilization at a plurality of charging apparatuses at which at least one battery charger is respectively provided, the power supply/demand adjustment method includes
a step of receiving a power supply/demand adjustment instruction,
a step of replacing the received power supply/demand adjustment instruction with a commit type power supply/demand adjustment instruction, which is set for each of the charging apparatuses, by utilizing at least one piece of information relating to the power utilization at the plurality of charging apparatuses, and
a step of transmitting the replaced commit type power supply/demand adjustment instruction to power management servers provided for each of the plurality of charging apparatuses and configured to manage the power utilization at the charging apparatuses at which the power management servers are provided.

An operation management server of the present invention is configured to
receive a power supply/demand adjustment instruction,
replace the power supply/demand adjustment instruction with a commit type power supply/demand adjustment instruction for each of charging apparatuses so as to respond to the power supply/demand adjustment instruction as the whole of the plurality of charging apparatuses, by utilizing at least one piece of charging apparatus information relating to power utilization of the plurality of charging apparatuses at which at least one battery charger is respectively provided, and
transmit the commit type power supply/demand adjustment instruction to the plurality of charging apparatuses.

A power management server of the present invention is a power management server provided at each of a plurality of charging apparatuses for managing power utilization at the plurality of charging apparatuses at which at least one battery charger is respectively provided, and is configured to
receive a commit type power supply/demand adjustment instruction, which is set for each of the charging apparatuses so as to respond to a power supply/demand adjustment instruction as the whole of the plurality of charging apparatuses, by utilizing at least one piece of charging apparatus information relating to the power utilization of the plurality of charging apparatuses, and
manage the power utilization of the charging apparatuses based on the received commit type power supply/demand adjustment instruction.

### Effect of the Invention

According to the present invention, a commit type instruction, which is set for each of charging apparatuses so as to respond to a power supply/demand adjustment instruction as the whole of a plurality of charging apparatuses, by utilizing information relating to power utilization at the plurality of charging apparatuses is transmitted to each charging apparatus. By this means, it is possible to reflect an idea of a manager on the power supply/demand adjustment instruction. Because the commit type power supply/demand adjustment instruction to be transmitted to each charging apparatus can be set for each charging location according to facility of each charging apparatus, or the like, convenience of customers is not degraded.

### Brief Description of Drawings

Figure 1 is a block diagram of a power supply/demand adjustment system according to one embodiment of the present invention.
Figure 2 is a diagram illustrating one example of flow of power supply/demand adjustment by the power supply/demand adjustment system illustrated in Figure 1.
Figure 3 is a diagram illustrating one example of a configuration of a charging service provider and stores in the power supply/demand adjustment system illustrated in Figure 1.
Figure 4 is a diagram illustrating an example of a case where a power utilization target value of each store is changed in response to a demand response in an example of power supply/demand adjustment in the configuration illustrated in Figure 3.
Figure 5 is a diagram illustrating an example of a case where a storage battery moves between stores in response to the demand response in the example of power supply/demand adjustment in the configuration illustrated in Figure 3.
Figure 6 is a diagram illustrating an example of a case where a spare storage battery is supplied to a store in response to the demand response in the example of power supply/demand adjustment in the configuration illustrated in Figure 3.

### Description of Embodiments

The present invention will be described in detail below with reference to the drawings. In the present invention, a "server" means a "server computer", and can include a CPU, a ROM, a RAM, a storage device such as a hard disc and an input/output interface with other equipment. A computer program for an operation of the server can be mounted in the ROM, and the server executes a predetermined operation according to this computer program. The computer program may be a one which has been recorded in a storage medium such as CD-ROM, DVD and a removable memory, and then has been mounted in the server with the use of an appropriate read-out device, or may also be a one which has been downloaded to the server through a network.

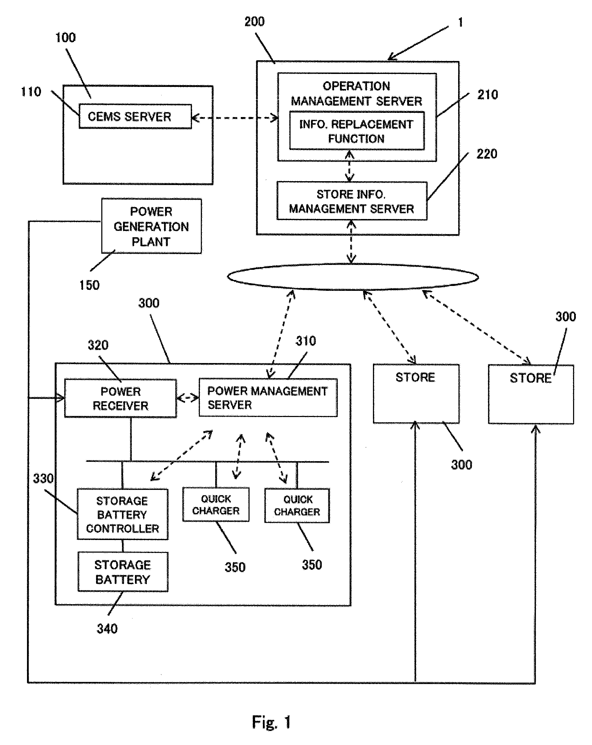

Referring to Figure 1, a block diagram of a power supply/demand adjustment system 1 according to one embodiment of the present invention is shown. The power supply/demand adjustment system 1 of the present embodiment has an energy management apparatus 100, a charging and discharging management apparatus 200 and a plurality of charging sites (charging apparatus). It is noted that, in Figure 1, an electric power line is shown by a solid line, and a network line is shown by a dashed line.

The energy management apparatus 100 has a CEMS (Community Energy Management System) server 110 which manages an amount of electric power supply in a power generation plant 150 and electric power demand in a district. The charging and discharging management apparatus 200 manages a plurality of stores 300 as charging sites. The charging and discharging management apparatus 200 and the plurality of stores 300 may be operated by the same charging service provider or may be operated by different charging service providers. The charging and discharging management apparatus 200 has an operation management server 210 and a store information management server 220 to make each store 300 efficiently operate without hindering convenience of customers while responding to demand response power supply/demand adjustment in the area transmitted from the CEMS server 110. In the present embodiment, the charging and discharging management apparatus 200 can be applied particularly to a charging service by a charging service provider for electric vehicles (hereinafter, also referred to as "EVs"), and the stores 300 can be charging stations for the EVs.

The operation management server 210 has a function of receiving a power supply/demand adjustment instruction from an energy management system, a function (information replacement function) of replacing the received power supply/demand adjustment instruction with a commit type power supply/demand adjustment instruction, which is set for each store 300, and a function of transmitting the replaced commit type power supply/demand adjustment instruction to each store 300. Here, the commit type instruction is a secondary power supply/demand adjustment instruction, which is set for each store 300 so as to respond to the power supply/demand adjustment instruction from the energy management system not as individual stores 300 but as the whole of the plurality of stores 300. Further, in other words, the commit type instruction can also be referred to as an instruction on which an idea of the service provider is reflected. In the present embodiment, an example of a case will be described where the power supply/demand adjustment instruction from the energy management system is a demand response (hereinafter, also referred to as a "DR") from the CEMS server 110.

It is possible to utilize a communication network for transmission of the commit type instruction from the operation management server 210 to each store and transmission of the DR from the CEMS server 110 to the operation management server 210. The store information management server 220 stores at least one piece of information relating to power utilization at each store 300.

Each of the stores 300 has a power management server 310, a power receiver 320, and at least one quick charger 350 and at least one storage battery controller 330 as a power utilization facility.

The power management server 310 controls the power receiver 320, the storage battery controller 330 and the quick charger 350 based on an instruction from the charging and discharging management apparatus 200. The power receiver 320 converts AC power from the power generation plant 150 into DC power and supplies the electric power to the storage battery controller 330 and the quick charger 350. The storage battery controller 330 performs charging and discharging the storage battery 340 according to an instruction from the power management server 310. Therefore, in the present embodiment, the storage battery 340 instead of the storage battery controller 330 can be referred to as power utilization facility. Further, the storage battery controller 330 and the storage battery 340 are not required to be provided at all the stores 300.

The quick charger 350 can be, for example, a battery charger for EVs.

Power supply/demand adjustment (optimization) by the above-described power supply/demand adjustment system 1 will be described next using an example of a case of EV charging service.

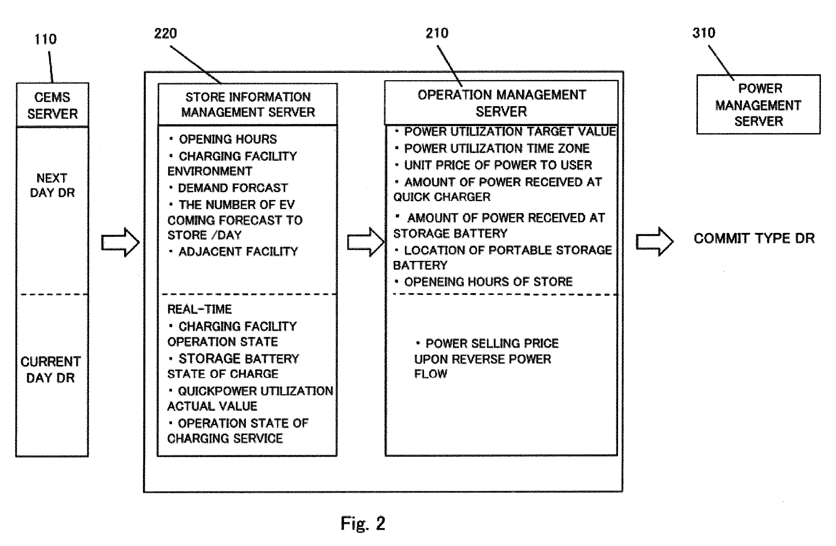

First, rough flow will be described with reference to Figure 2.

A demand response (DR) is transmitted from the CEMS server 110 to the operation management server 210. The DR includes one which should be responded urgently and one which should be responded according to a plan created in advance. In the present embodiment, a case will be described as one example where the DR which should be responded urgently is a "current day DR" which is a DR transmitted as a request for a few hours from current time, and the DR which should be responded according to the plan created in advance is a "next day DR" which is a DR transmitted as a request for the next day.

The operation management server 210 replaces the DR received from the CEMS server 110 with a commit type DR set for each store so as to respond to the DR as the whole of all stores 300 while referring to information of each store 300 stored in the store information management server 220 and transmits the commit type DR to the power management server 310 of each store 300.

Examples of the information of each store 300 stored in the store information management server 220 include opening hours, a charging facility environment, demand forecast, prediction of the number of EVs coming to the store per day, adjacent facility, or the like, of the store 300. The charging facility environments are information relating to, for example, the number, capability, or the like, of quick chargers 350. The adjacent facility is information relating to, for example, the number, types, or the like, of other commercial facility around the store 300. Further, it is preferable to further refer to information such as a real-time operation state of the charging facility, storage battery capacity, a power utilization actual value and an operation state of charging service for the current day DR.

The operation management server 210 can utilize at least one piece of information among these information to replace the DR from the CEMS server 110 with the commit type DR.

The commit type DR replaced by the operation management server 210 can include at least one piece of information which affects use of electric power at the store 300. Examples of the information which affects use of electric power at the store 300 include a power utilization target value, a time zone of power utilization, unit price of electric power for a user, an amount of electric power received at the quick charger 350, an amount of electric power received at a stationary storage battery, a location where a portable storage battery is provided, and opening hours of the store 300. Particularly, for the current day DR, the information can include power selling price, or the like, upon reverse power flow in addition to those described above.

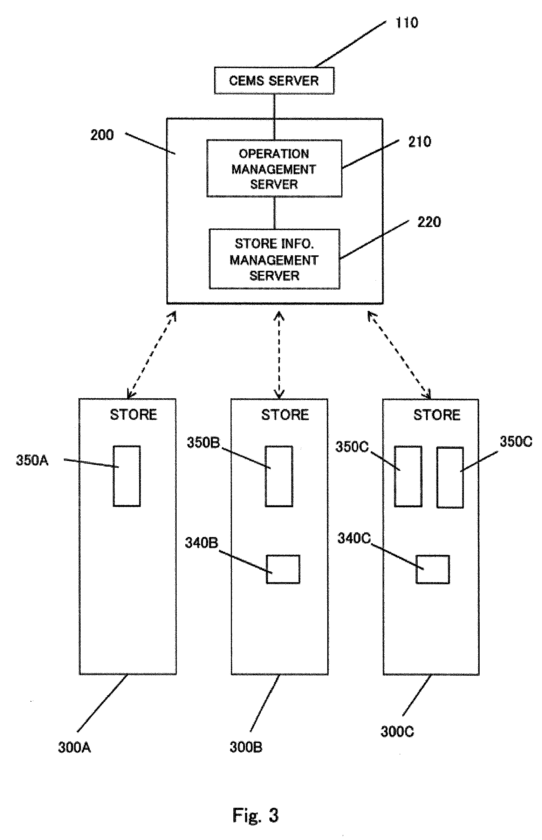

A more specific example of the above-described optimization of power supply/demand will be described next using a case where the EV charging service provider manages three stores 300A, 300B and 300C using the charging and discharging management apparatus 200 as illustrated in Figure 3. In the example illustrated in Figure 3, it is assumed that opening hours, the number of storage batteries 340B, 340C, and the number of quick chargers 350A, 350B and 350C of the respective stores 300A, 300B and 300C are as indicated in the following Table 1.

**[Table 1]**

| Store | 300A | 300B | 300C |
|---|---|---|---|
| Opening hours | 9:00-21:00 | 8:00-23:00 | Open 24 hours a day |
| The number of quick chargers | 1 | 1 | 2 |
| The number of storage batteries | 0 | 1 | 1 |

### (Example 1: Change of power utilization target value)

It is assumed that a DR as indicated in Table 2 is presented from the CEMS server 110 to the operation management server 210. Table 2 indicates a DR which promotes consumption of surplus power for charging service providers. In this table, an example is indicated as power supply/demand adjustment where surplus power occurs in a time zone from 22 o'clock at night to 1 o'clock in the next day while power is less utilized and rebate corresponding to consumption of the surplus power is provided.

**[Table 2]**

| Data ID | ○○○○○○○ |
|---|---|
| Date | Next day |
| Time zone | 22:00 to 1:00 in next day |
| Demand adjustment | Provide rebate corresponding to power utilization |

For such a DR, conventionally, for example, a use amount of 5 kW is assigned to all the stores without taking into account information for each store. While a target time of the DR is 3 hours, because the store 300A is not open during the target time, and the store 300B is open only for one hour in the target time, total opening hours are four hours, and a total power utilization amount is 20 kWh.

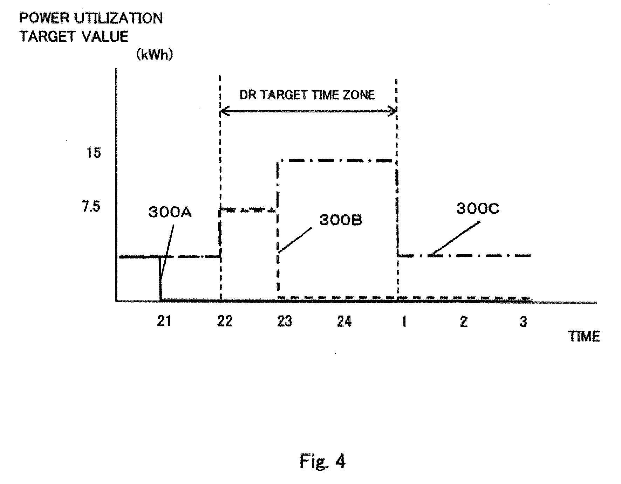

In this example, the operation management server 210 determines a power utilization target value for each store according to information of each store. A function for determining a power utilization target value for each store may be set at the operation management server 210. The function can include a parameter as appropriate from the number of quick chargers, power consumption of the quick chargers, capacity of a stationary storage battery, opening hours of the store, prediction data of the number of EVs coming per day, or the like, for each store. Further, the function can include a value obtained through experience relating to relationship between unit price and the number of customers at the charging service provider and the stores. These parameters can be acquired from the store information management server 220. By this means, the operation management server 210 replaces the DR from the CEMS server 110 with the commit type DR in which a power utilization target value is set for each store as illustrated in, for example, Figure 4, and transmits the replaced commit type DR to each store.

In the example illustrated in Figure 4, it is assumed that an amount of electric power of 5 kW is assigned to each store during opening hours at first. Because the store 300A is closed at 21 o'clock, after 21 o'clock, the same amount of electric power is continuously assigned to the stores 300B and 300C which are open. At 22 o'clock, because it is the DR target time, the operation management server 210 imposes an amount of electric power assigned to the store 300A which is closed on the stores 300B and 300C equally by 2.5 kW each. Therefore, the amount of electric power of 7.5 kW is assigned to the stores 300B and 300C after 22 o'clock.

However, because the store 300B is closed at 23 o'clock, and only the store 300C is open, the operation management server 210 imposes an amount of electric power assigned to the store 300B on the store 300C after 23 o'clock. As a result, from 23 o'clock to 1 o'clock in the next day at which the DR target time is finished, the amount of electric power of 15 kW is assigned to the store 300C, and the total amount of electric power at all the stores 300A to 300C in the DR target time zone is 45 kW. In this manner, according to this example, it is possible to achieve more than double the amount of electric power conventionally used and, as a result, to obtain more than double rebate.

Further, when the power utilization target value is set high based on the DR in this manner, a user of the EV is notified of information beneficial for the user of the EV which utilizes the quick charger, and the user is induced to come to the store in a time zone during which consumption of surplus power is promoted (from 22 o'clock to 1 o'clock in the next day), so that consumption of the surplus power in the time zone (from 22 o'clock to 1 o'clock in the next day) is promoted. The information beneficial for the user of the EV may depend on a way of billing for charging action of the user of the EV. For example, when the user is billed for charging action of the user of the EV per use, privilege information beneficial for the user of the EV can be discount of charging fee per one time of charging. When the user is billed for charging action of the user of the EV on an amount basis, privilege information beneficial for the user of the EV can be discount of charging fee per amount of electric power. When the user is billed for charging action of the user of the EV on a time basis, privilege information beneficial for the user of the EV can be extension of a charging time per charging fee. When the user is billed for charging action of the user of the EV at fixed fee for each month, privilege information beneficial for the user of the EV can be provision of points. Further, in addition to the discount of charging fee, there can be, for example, provision of points according to a charging amount, shortening of a charging time, little gift, additional service such as vehicle wash, or the like.

As described above, the operation management server 210 can replace the DR presented from the CEMS server 110 with a commit type DR directed to each store so that the amount of electric power at a store which does not affect the target time zone of the DR is imposed on the store which is open according to opening hours for each store.

It should be noted that information included in the replaced commit type DR directed to each store may be, for example, unit price of electric power to a customer, an amount of electric power received at the quick charger, an amount of electric power received at the stationary storage battery, a location where the portable stationary storage battery is provided, opening hours of the store, or the like, in addition to the power utilization target value and the power utilization time zone.

Specifications of a power supply/demand adjustment instruction presented from external agency are not limited to the above-described example. While, in the above description, incentive for promotion of power consumption upon occurrence of surplus power is indicated with a pricing system of peak time rebate, for example, the pricing system may be time of use, critical peak pricing, capacity commitment program or limited peak time rebate, or an overlapped demand response in which these pricing systems are combined.

### (Example 2: change of opening hours)

It is assumed that the DR transmitted from the CEMS server 110 is the same as that in Example 1. Further, the present example is different from Example 1 in a converting rule of a power supply/demand adjustment instruction by the information replacement function of the operation management server 210, and the present example may be the same as Example 1 in other points, unless otherwise indicated.

In the present example, the operation management server 210 sets opening hours of each store so that acquisition of rebate is prioritized according to information for each store and all the stores are open in the target time zone of the DR. For example, the operation management server 210 respectively extends the opening hours to from 21 o'clock to 1 a.m. in the next day for the store 300A, extends the opening hours to from 23 o'clock to 1 a.m. in the next day for the store 300B. Because the store 300C is open 24 hours a day, opening hours are not changed. Further, the power utilization target value of each store can be set according to facility, or the like, of each store. For example, in the case of the present example, when two quick chargers are provided at the store 300C among three stores 300A to 300C, and the store 300C has a stationary storage battery for performing power assistance when charging electric power to the EV runs out, even if charging action which requires great power is repeatedly performed, there is a possibility that charging service can be smoothly operated. Therefore, concerning the store 300C, it is desirable to request the store 300C which is likely to be capable of charging more EVs to consume more power by setting the power utilization target value at higher than those in other stores 300A and 300B.

The opening hours and the power utilization target value of each store can be set based on the information of each store acquired from the store information management server 220. The operation management server 210 replaces the DR from the CEMS server 110 with the commit type DR for which the opening hours are changed for each store and transmits the replaced DR to each store.

According to this example, the DR from the CEMS server 110 can be replaced with the commit type DR for each store on which policy of the charging service provider is reflected. For example, when the charging service provider selects acquisition of rebate rather than personnel expense, the opening hours of the store can be changed according to the policy. Further, the power utilization target value of the store may be set higher to induce more customers to a store where it is highly likely to be able to charge more EVs from the facility environment of the store. It is possible to perform efficient power supply/demand adjustment by appropriately inducing customers while taking into account a difference of the facility environments of the respective stores.

### (Example 3: change of power utilization target value according to storage battery state of each store)

This example differs from Example 1 in a converting rule of a power supply/demand adjustment instruction by the information replacement function of the operation management server 210, and this example may be the same in other points unless otherwise indicated. In this example, it is assumed that a current day DR to which peak time rebate as indicated in Table 3 is introduced is requested from the CEMS server 110 to the operation management server 210. In this table, for example, an example is indicated where rebate is provided corresponding to an amount of electric power consumption being suppressed as power supply/demand adjustment in order to encourage suppression of power consumption in a time zone from 11 o'clock to 13 o'clock during which demand for electric power becomes high in summer, or the like.

**[Table 3]**

| Data ID | OOOOOOO |
|---|---|
| Date | Current day |
| Time zone | 11:00 to 13:00 |
| Demand adjustment | Provide rebate corresponding to power suppression |

Further, it is assumed that capacity of the storage batteries held by the store 300B and the store 300C is respectively, 30 kWh and 60 kWh, a state of charge of the storage battery of the store 300B is 50%, and a state of charge of the storage battery of the store 300C is 80%.

The operation management server 210 replaces the DR from the CEMS server 110 with the commit type DR in which the power utilization target value of each store is set according to a storage battery state of each store acquired in real-time from the store information management server 220, and transmits the replaced DR to each store. As the commit type DR to be transmitted to each store, for example, the store 300A which does not hold a storage battery acquires rebate by lowering the power utilization target value from 11 o'clock to 13 o'clock which is a target time zone of the DR compared to that in other time zones. Because the state of charge of the store 300B which holds one storage battery, is 50%, the store 300B suppresses power utilization by utilizing the storage battery from 12 o'clock to 13 o'clock during which it is expected that power utilization becomes high in the target time zone of the DR. Because the store 300C holds one storage battery and the state of charge is 80% and favorable, the store 300C suppresses power utilization by utilizing the storage battery from 11 o'clock to 13 o'clock which is the target time zone of the DR. Then, the store 300C accumulates power in the storage battery by utilizing power from 13 o'clock to 17 o'clock which is after the target time zone of the DR, and during which it is expected that power utilization becomes lower. Further, when the power utilization target value is set lower based on such a DR, the information is replaced with information beneficial for the user of the EV to induce the user of the EV to come to the store in a time other than the target time zone of the DR, so that power consumption in the target time zone of the DR is suppressed.

According to this example, even when a DR to which peak time rebate is introduced is transmitted, by utilizing the storage battery provided at the store, it is possible to respond to the DR as the whole of the plurality of stores without degrading convenience of customers.

### (Example 4: change of store where storage battery is provided)

This example differs from Example 1 in a converting rule of the power supply/demand adjustment instruction by the information replacement function of the operation management server 210 and change of arrangement of power utilization facility, and this example may be the same in other points unless otherwise indicated.

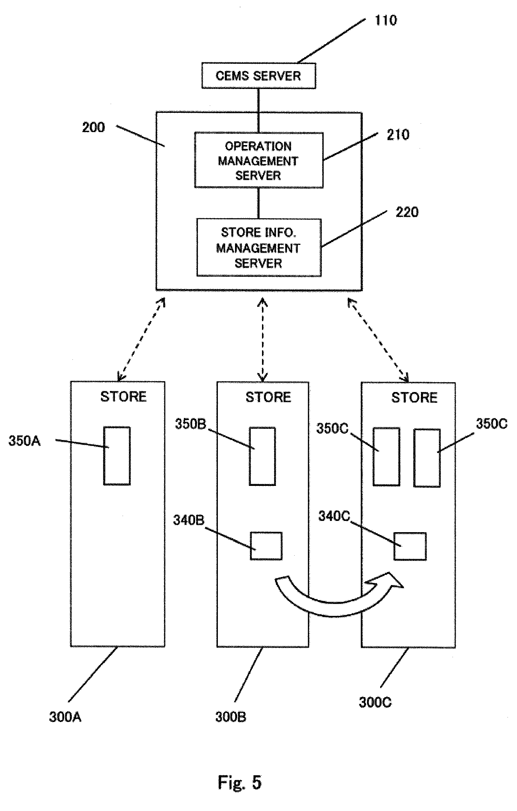

In this example, as illustrated in Figure 5, it is assumed that quick chargers 350A, 350B and 350C and storage batteries s340B and 340C are disposed in the stores 300A, 300B and 300C. The operation management server 210 replaces the DR from the CEMS server 110 with the commit type DR by utilizing the information of the stores 300A, 300B and 300C acquired from the store information management server 220 and transmits the replaced DR to each of the stores 300A, 300B and 300C.

Here, the commit type DR transmitted from the operation management server 210 to each of the stores 300A, 300B and 300C can be a DR associated with change of facility of each of the stores 300A, 300B and 300C, for example, movement of a storage battery among the stores. For example, when it is expected that demand for the storage battery is increased at the store 300C, the DR to be transmitted to the store B can include an instruction which instructs transferring of the storage battery 340B disposed at the store B to the store C, and the DR to be transmitted to the store C can include an instruction which instructs reception of the storage battery 340B transferred from the store B.

The number of storage batteries to be moved can be set arbitrary according to prospects of change of the demand, or the like, and is not limited to one, and a plurality of storage batteries may be moved. Further, for example, when the state of charge of the storage battery disposed at a store where it is expected that demand of the storage battery increases is low, it is possible to, for example, replace the storage battery disposed at the store with a storage battery whose state of charge is high and which is disposed at another store, that is, it is possible to replace one or a plurality of storage batteries among the stores according to the states of charge of the storage batteries.

According to this example, by lending and borrowing power utilization facility among the stores, it is possible to respond to the DR as the whole of the plurality of stores without degrading convenience of customers.

### (Example 5: replenishment of storage battery)

This example differs from Example 1 in a converting rule of the power supply/demand adjustment instruction by the information replacement function of the operation management server 210 and change of arrangement of power utilization facility, and this example may be the same in other points unless otherwise indicated.

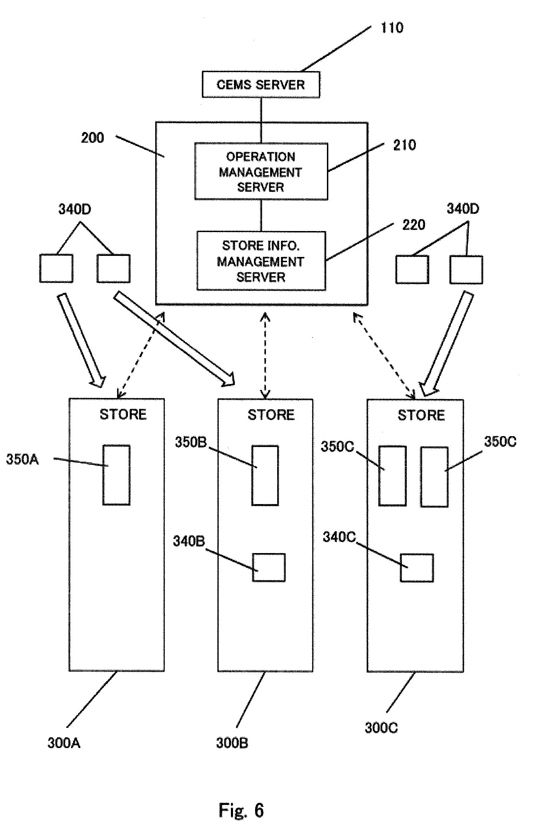

In this example, as illustrated in Figure 6, it is assumed that quick chargers 350A, 350B and 350C and storage batteries 340B and 340C are disposed at respective stores 300A, 300B and 300C. Further, it is assumed that the charging service provider or other providers hold a plurality of spare storage batteries 340D at a location different from the respective stores 300A, 300B and 300C. The operation management server 210 replaces the DR from the CEMS server 110 with a commit type DR by utilizing information of each of the stores 300A, 300B and 300C acquired from the store information management server 220 and transmits the replaced DR to each of the stores 300A, 300B and 300C.

Here, the commit type DR to be transmitted from the operation management server 210 to each of the stores 300A, 300B and 300C can be a DR associated with transferring of the storage battery 340D held by the charging service provider 200 to each of the stores 300A, 300B and 300C. For example, when it is expected that demand for the storage battery is increased at each of the stores 300A, 300B and 300C, the DR to be transmitted to each of the stores 300A, 300B and 300C can include an instruction which instructs reception of the spare storage battery 340D from the charging service provider or other providers.

In this example, an example has been described where one spare storage battery 340D is replenished to each of the stores 300A, 300B and 300C. However, the stores 300A, 300B and 300C at which the spare storage batteries 340d are replenished and the number of spare storage batteries 340D to be replenished can be arbitrarily changed according to prospective demand, or the like.

According to this example, by replenishing power utilization facility to a store from a location other than the stores as necessary, it is possible to respond to a DR as the whole of the plurality of stores without degrading convenience of customers.

While some examples of the commit type DR to be transmitted to each store have been described above, with what kind of commit type DR the charging service provider responds to the DR from the CEMS server 110 can be arbitrarily set by the charging service provider. For example, the operation management server 210 can be configured to transmit a specific type (such as a power utilization target value setting type and an opening hours changing type) of a commit type DR to each store as requested by the charging service provider. Alternatively, it is also possible to employ a configuration where a plurality of types of commit type DR are set to the operation management server 210, and the charging service provider 200 selects a desired type of commit type DR among the plurality of types.

According to the above-described embodiment, the DR is replaced with the commit type DR set for each store to respond to the DR as the whole of the plurality of stores by utilizing information relating to power utilization at the plurality of stores, and the commit type DR is transmitted to each store. That is, the commit type DR is not directed to realizing optimization of individual stores, but directed to realizing optimization of the whole of the plurality of stores. By this means, the DR from a power grid can be made a DR on which an idea of the charging service provider is reflected in a stage where the DR is replaced with the commit type DR, and transmitted to each store. Because the commit type DR to be transmitted to each store is set for each store according to facility of each store, or the like, convenience of customers is not degraded.

In the present invention, a storage battery may be an arbitrary storage battery such as a stationary storage battery and a portable storage battery, and the shape, capacity, or the like, of the storage battery are not particularly limited. The storage battery can be an electric vehicle. When the storage battery is an electric vehicle, the storage battery can be easily moved if the commit type DR is associated with movement of the storage battery.

Further, while, in the above-described embodiment, adjustment of power supply/demand in charging service of the EV has been described, the present invention is not limited to charging of the EV, and can be widely applied to adjustment of power supply/demand of electric equipment in arbitrary facility, can maximize a power supply/demand adjustment effect and can optimize balance among cost of electric power, rebate and customer satisfaction.

Further, while, in the above-described embodiment, a case has been described as an example where the operation management server acquires a power supply/demand adjustment instruction from the CEMS server, the present invention is not limited to an energy management system in the area and can be applied to a case where a power supply/demand adjustment instruction is acquired from other energy management systems such as a BEMS (Building Energy Management System) and an FEMS (Factory Energy Management System). For example, when the power supply/demand adjustment system is provided at an apartment house, a building, or the like, a power supply/demand adjustment instruction may be acquired from the BEMS which is an external institution. Accordingly, the charging apparatus is not limited to a form of a store as described above, but may be an arbitrary form as long as at least one battery charger is installed.

As described above, the present specification discloses the following invention.

(1) A power supply/demand adjustment system including
   a plurality of charging apparatuses at which at least one battery charger is respectively provided,
   a charging apparatus information management server configured to store at least one piece of information relating to power utilization of the plurality of charging apparatuses,
   power management servers provided for each of the plurality of charging apparatuses and configured to manage the power utilization at the charging apparatuses at which the power management servers are provided, and
   an operation management server configured to receive a power supply/demand adjustment instruction, replace the received power supply/demand instruction with a commit type power supply/demand adjustment instruction, which is set for each of the charging apparatuses so as to respond to the power supply/demand adjustment instruction as the whole of the plurality of charging apparatuses, by utilizing at least one piece of information stored in the charging apparatus information management server and transmit the replaced commit type power supply/demand adjustment instruction to the power management servers of the plurality of charging apparatuses.
(2) The power supply/demand adjustment system according to the above-described (1), in which the commit type power supply/demand instruction includes at least one of a power utilization target value, a time zone of power utilization, unit price of electric power to a user, an amount of electric power received at the battery chargers and operation time of the charging apparatuses.
(3) The power supply/demand adjustment system according to the above-described (1), in which at least one storage battery is further provided at at least one of the plurality of charging apparatuses.
(4) The power supply/demand adjustment system according to the above-described (3), in which the commit type power supply/demand adjustment instruction includes at least one of a power utilization target value, a time zone of power utilization, unit price of electric power to a user, an amount of electric power received at the battery chargers, an amount of electric power received at the storage batteries, the charging apparatuses at which the storage batteries are provided and operation time of the charging apparatuses.
(5) The power supply/demand adjustment system according to the above-described (3) or (4), in which the commit type power supply/demand adjustment instruction includes an instruction for moving at least one of the storage batteries among the plurality of charging apparatuses.
(6) The power supply/demand adjustment system according to any one of the above-described (3) to (5), further including
   at least one spare storage battery different from the storage batteries disposed at the charging apparatuses, the spare storage battery being provided at a location different from the charging apparatuses,
   in which the commit type power supply/demand adjustment instruction includes an instruction for moving at least one of the spare storage batteries to at least one charging apparatus among the plurality of charging apparatuses.
(7) The power supply/demand adjustment system according to any one of the above-described (3) to (6), in which the storage battery is an electric vehicle.
(8) The power supply/demand adjustment system according to any one of the above-described (1) to (7), in which the information stored in the charging apparatus information management server includes at least one of the operation time of the charging apparatuses, charging environments of the charging apparatuses, demand forecast, a state of power utilization in actual time, and an actual result of the power utilization in actual time.
(9) The power supply/demand adjustment system according to any one of the above-described (1) to (8), in which the charging apparatus is a charging station for electric vehicles.
(10) A power supply/demand adjustment method for adjusting power utilization of a plurality of charging apparatuses at which at least one battery charger is respectively provided, the power supply/demand adjustment method including
   a step of receiving a power supply/demand adjustment instruction,
   a step of replacing the received power supply/demand adjustment instruction with a commit type power supply/demand adjustment instruction, which is set for each of the charging apparatuses, by utilizing at least one piece of information relating to power utilization at the plurality of charging apparatuses, and
   a step of transmitting the replaced commit type power supply/demand adjustment instruction to power management servers provided for each of the plurality of charging apparatuses and configured to manage the power utilization at the charging apparatuses at which the power management servers are provided.
(11) The power supply/demand adjustment method according to the above-described (10), in which the commit type power supply/demand adjustment instruction includes at least one of a power utilization target value, a time zone of power utilization, unit price of electric power to a user, an amount of electric power received at the battery chargers, and operation time of the charging apparatuses.
(12) The power supply/demand adjustment method according to the above-described (10), in which at least one storage battery is provided at at least one of the plurality of charging apparatuses.
(13) The power supply/demand adjustment method according to the above-described (12), in which the commit type power supply/demand adjustment instruction includes at least one of a power utilization target value, a time zone of power utilization, unit price of electric power to a user, an amount of electric power received at the battery chargers, an amount of electric power received at the storage batteries, the charging apparatuses at which the storage batteries are provided, and operation time of the charging apparatuses.
(14) The power supply/demand adjustment method according to the above-described (12) or (13), in which the commit type power supply/demand adjustment instruction includes an instruction for moving at least one of the storage batteries among the plurality of charging apparatuses.
(15) The power supply/demand adjustment method according to any one of the above-described (12) to (14), further including
   a step of disposing in advance at least one spare storage battery different from the storage batteries disposed at the charging apparatuses, at a location different from the charging apparatuses,
   in which the commit type power supply/demand adjustment instruction includes an instruction for moving at least one of the spare storage batteries to at least one charging apparatus among the plurality of charging apparatuses.
(16) The power supply/demand adjustment method according to any one of the above-described (12) to (15), in which the storage battery is an electric vehicle.
(17) The power supply/demand adjustment method according to any one of the above-described (10) to (16), in which the information stored in the charging apparatus information management server includes at least one of operation time of the charging apparatuses, charging environments at the charging apparatuses, demand forecast, a state of the power utilization in actual time, and an actual result of the power utilization in actual time.
(18) The power supply/demand adjustment method according to any one of the above-described (10) to (17), in which the charging apparatus is a charging station for electric vehicles.
(19) An operation management server configured to
   receive a power supply/demand adjustment instruction,
   replace the power supply/demand adjustment instruction with a commit type power supply/demand adjustment instruction for each of charging apparatuses so as to respond to the power supply/demand adjustment instruction as the whole of a plurality of charging apparatuses by utilizing at least one piece of charging apparatus information relating to power utilization of the plurality of charging apparatuses at which at least one battery charger is respectively provided, and
   transmit the commit type power supply/demand adjustment instruction to the plurality of charging apparatuses.
(20) A power management server provided at each of a plurality of charging apparatuses to manage power utilization of the plurality of charging apparatuses at which at least one battery charger is respectively provided, the power management server being configured to
   receive a commit type power supply/demand adjustment instruction, which is set for each of the charging apparatuses so as to respond to a power supply/demand adjustment instruction as the whole of the plurality of charging apparatuses, by utilizing at least one piece of charging apparatus information relating to the power utilization of the plurality of charging apparatuses, and
   manage the power utilization at the charging apparatuses based on the received commit type power supply/demand adjustment instruction.

### Reference Signs List

- 100: Energy management apparatus
- 110: CEMS server
- 150: Power generation plant
- 200: Charging and discharging management apparatus
- 210: Operation management server
- 220: Store information management server
- 300: Store
- 310: Power management server
- 320: Power receiver
- 330: Storage battery control unit
- 340: Storage battery
- 350: Quick charger

## Claims

1. A power supply/demand adjustment system, comprising:
a plurality of charging apparatuses at which at least one battery charger is respectively provided;
a charging apparatus information management server configured to store at least one piece of information relating to power utilization of the plurality of charging apparatuses;
power management servers provided for each of the plurality of charging apparatuses and configured to manage the power utilization at the charging apparatuses at which the power management servers are provided; and
an operation management server configured to receive a power supply/demand adjustment instruction, replace the received power supply/demand adjustment instruction with a commit type power supply/demand adjustment instruction, which is set for each of the charging apparatuses so as to respond to the power supply/demand adjustment instruction as the whole of the plurality of charging apparatuses, by utilizing at least one piece of information stored in the charging apparatus information management server, and transmit the replaced commit type power supply/demand adjustment instruction to the power management servers of the plurality of charging apparatuses.

2. The power supply/demand adjustment system according to claim 1, wherein the commit type power supply/demand adjustment instruction includes at least one of a power utilization target value, a time zone of power utilization, unit price of electric power to a user, an amount of electric power received at the battery chargers, and operation time of the charging apparatuses.

3. The power supply/demand adjustment system according to claim 1, wherein at least one storage battery is further provided at at least one of the plurality of charging apparatuses.

4. The power supply/demand adjustment system according to claim 3, wherein the commit type power supply/demand adjustment instruction includes at least one of a power utilization target value, a time zone of power utilization, unit price of electric power to a user, an amount of electric power received at the battery chargers, an amount of electric power received at the storage batteries, the charging apparatuses at which the storage batteries are provided, and operation time of the charging apparatuses.

5. The power supply/demand adjustment system according to claim 3 or 4, wherein the commit type power supply/demand adjustment instruction includes an instruction for moving at least one of the storage batteries among the plurality of charging apparatuses.

6. The power supply/demand adjustment system according to any one of claims 3 to 5, further comprising:
at least one spare storage battery different from the storage batteries disposed at the charging apparatuses, the spare storage battery being disposed at a location different from the charging apparatuses,
wherein the commit type power supply/demand adjustment instruction includes an instruction for moving at least one of the spare storage batteries to at least one charging apparatus among the plurality of charging apparatuses.

7. The power supply/demand adjustment system according to any one of claims 3 to 6, wherein the storage battery is an electric vehicle.

8. The power supply/demand adjustment system according to any one of claims 1 to 7, wherein the information stored in the charging apparatus information management server includes at least one of operation time of the charging apparatuses, charging environments of the charging apparatuses, demand forecast, a state of the power utilization in actual time, and an actual result of the power utilization in actual time.

9. The power supply/demand adjustment system according to any one of claims 1 to 8, wherein the charging apparatus is a charging station for electric vehicles.

10. A power supply/demand adjustment method for adjusting power utilization of a plurality of charging apparatuses at which at least one battery charger is respectively provided, the power supply/demand adjustment method comprising:
a step of receiving a power supply/demand adjustment instruction;
a step of replacing the received power supply/demand adjustment instruction with a commit type power supply/demand adjustment instruction, which is set for each of the charging apparatuses, by utilizing at least one piece of information relating to the power utilization at the plurality of charging apparatuses; and
a step of transmitting the replaced commit type power supply/demand adjustment instruction to power management servers provided for each of the plurality of charging apparatuses and configured to manage the power utilization at the charging apparatuses at which the power management servers are provided.

11. The power supply/demand adjustment method according to claim 10, wherein the commit type power supply/demand adjustment instruction includes at least one of a power utilization target value, a time zone of power utilization, unit price of electric power to a user, an amount of electric power received at the battery chargers, and operation time of the charging apparatuses.

12. The power supply/demand adjustment method according to claim 10, wherein at least one storage battery is further provided at at least one of the plurality of charging apparatuses.

13. The power supply/demand adjustment method according to claim 12, wherein the commit type power supply/demand adjustment instruction includes at least one of a power utilization target value, a time zone of power utilization, unit price of electric power to a user, an amount of electric power received at the battery chargers, an amount of electric power received at the storage batteries, the charging apparatuses at which the storage batteries are provided, and operation time of the charging apparatuses.

14. The power supply/demand adjustment method according to claim 12 or 13, wherein the commit type power supply/demand adjustment instruction includes an instruction for moving at least one of the storage batteries among the plurality of charging apparatuses.

15. The power supply/demand adjustment method according to any one of claims 12 to 14, further comprising:
a step of disposing in advance at least one spare storage battery different from the storage batteries disposed at the charging apparatuses, at a location different from the charging apparatuses,
wherein the commit type power supply/demand adjustment instruction includes an instruction for moving at least one of the spare storage batteries to at least one of the plurality of charging apparatuses.

16. The power supply/demand adjustment method according to any one of claims 12 to 15, wherein the storage battery is an electric vehicle.

17. The power supply/demand adjustment method according to any one of claims 10 to 16, wherein the information stored in the charging apparatus information management server includes at least one of operation time of the charging apparatuses, charging environments at the charging apparatuses, demand forecast, a state of the power utilization in actual time and an actual result of the power utilization in actual time.

18. The power supply/demand adjustment method according to any one of claims 10 to 17, wherein the charging apparatus is a charging station for electric vehicles.

19. An operation management server configured to:
receive a power supply/demand adjustment instruction;
replace the power supply/demand adjustment instruction with a commit type power supply/demand adjustment instruction for each of the charging apparatuses so as to respond to the power supply/demand adjustment instruction as the whole of the plurality of charging apparatuses by utilizing at least one piece of charging apparatus information relating to power utilization of the plurality of charging apparatuses at which at least one battery charger is respectively provided; and
transmit the commit type power supply/demand adjustment instruction to the plurality of charging apparatuses.

20. A power management server provided at each of a plurality of charging apparatuses to manage power utilization of the plurality of charging apparatuses at which at least one battery charger is respectively provided, the power management server being configured to:
receive a commit type power supply/demand adjustment instruction, which is set for each of the charging apparatuses so as to respond to a power supply/demand adjustment instruction as the whole of the plurality of charging apparatuses, by utilizing at least one piece of charging apparatus information relating to the power utilization of the plurality of charging apparatuses; and
manage the power utilization at the charging apparatuses based on the received commit type power supply/demand adjustment instruction.
